# EUROPÄISCHE PATENTSCHRIFT

(11) **EP 2 216 960 B1**
(45) Veröffentlichungstag und Bekanntmachung des Hinweises auf die Patenterteilung: **26.08.2015**
(21) Anmeldenummer: 10000585.9
(22) Anmeldetag: 21.01.2010
(51) Int. Cl.: H04L 29/06, H04L 12/22

(54) **Authentisierung einer Clientreinrichtung**
Authentication of a client device
Authentification d'un dispositif client

(30) Priorität: 04.02.2009 DE 102009007335
(43) Veröffentlichungstag der Anmeldung: 11.08.2010
(73) Patentinhaber: Giesecke & Devrient GmbH, 81677 München (DE)
(72) Erfinder: Fiedler, Michael, Dr., 81369 München (DE)

(56) Entgegenhaltungen:
- EP-A1- 1 933 252
- EP-A2- 1 647 874
- WO-A1-01/31840
- WO-A2-2006/121618

## Beschreibung

Die vorliegende Erfindung betrifft ein Verfahren auf einer Servereinrichtung zum Authentifizieren einer mit der Servereinrichtung verbundenen Clienteinrichtung, ein entsprechendes Verfahren auf einer Clienteinrichtung sowie eine derartige Servereinrichtung und eine Clienteinrichtung.

In diesem Zusammenhang ist nachfolgend unter dem Begriff "Authentifizierung" die Prüfung einer Berechtigung der Clienteinrichtung durch die Servereinrichtung zu verstehen, während mit "Authentisierung" der umgekehrte Vorgang bezeichnet wird, nämlich der Nachweis einer Berechtigung der Clienteinrichtung gegenüber der Servereinrichtung.

Bei Servereinrichtungen in einem Datenkommunikationsnetz, gegenüber denen sich eine Vielzahl von Clienteinrichtungen unter Umständen nahezu gleichzeitig anmelden, um eine Datenkommunikationssitzung mit der Servereinrichtung zu etablieren, können erhebliche Verzögerungen bei der Authentifizierung der betreffenden Clienteinrichtungen und/oder bei bereits etablierten Datenkommunikationssitzungen auftreten, da die erforderliche sichere Authentifizierung zumeist auf rechenzeitintensiven asymmetrischen Verfahren beruht. Rechenzeiteffizientere Verfahren, wie z.B. eine einfache Kennwortabfrage, sind demgegenüber nicht ausreichend sicher.

In diesem Zusammenhang betrifft die EP 1 933 252 A1 einen portablen Datenträger, z. B. eine Mobilfunkkarte oder dergleichen, der sich gegenüber Servereinrichtungen mit einem Einmalkennwort unter Verwendung einer asymmetrischen Verschlüsselung derart anmelden kann. Die WO 2006/121618 121618 A2 betrifft demgegenüber ein Verfahren zur verzögerten Authentifizierung eines Benutzers durch eine Servereinrichtung, z.B. in dem Falle einer temporär nicht verfügbaren Authentifizierungseinrichtung, so dass der Benutzer bis zur Authentifizierung einen ungeprüften Zugang zu der Servereinrichtung hat. WO 01/31840 A1 verwendet zeitabhängige Einmalpasswörter. Die unabhängigen Ansprüche sind abgegrenzt gegenüber EP 1-647874 A2.

Es ist die Aufgabe der vorliegenden Erfindung, selbst bei hohen Rechenauslastungen der Servereinrichtung Clienteinrichtungen zügig und hinreichend sicher zu authentifizieren.

Diese Aufgabe wird durch die Merkmale der unabhängigen Ansprüche gelöst. In davon abhängigen Ansprüchen sind vorteilhafte Ausgestaltungen und Weiterbildungen der Erfindung angegeben.

Erfindungsgemäß authentifiziert eine Servereinrichtung eine mit dieser in Datenkommunikation stehende Clienteinrichtung dadurch, dass zunächst die momentane Rechenauslastung der Servereinrichtung bzw. ihres Prozessors, d.h. die Serverauslastung, ermittelt wird und eine rechenzeiteffiziente, vorläufige Authentifizierung der Clienteinrichtung durchgeführt wird, so-fern die ermittelte Serverauslastung über einer vorgegebenen Auslastungsschwelle liegt, da in diesem Fall davon auszugehen ist, dass eine rechenzeitintensive sichere Authentifizierung nicht mit der gebotenen Schnelligkeit bearbeitet werden könnte bzw. Verzögerungen bei der Abarbeitung bereits etablierter Datenkommunikationssitzungen zur Folge hätte. Sobald die Serverauslastung später wieder unter die vorgegebene Auslastungsstelle gesunken ist und eine hinreichend niedrige Serverauslastung vorliegt, wird die sichere Authentifizierung der betreffenden Clienteinrichtung nachgeholt.

Bei der vorläufigen Authentifizierung der Clienteinrichtung wird geprüft, ob ein auf der Servereinrichtung vorliegendes Einmalkennwort mit einem Einmalkennwort übereinstimmt, das die Servereinrichtung von der Clienteinrichtung zum Zwecke der vorläufigen Authentisierung empfangen hat. Sofern die Einmalkennwörter übereinstimmen, gilt die Clienteinrichtung als vorläufig authentifiziert. Anschließend erzeugt die Servereinrichtung ein weiteres, neues Einmalkennwort für eine zukünftige vorläufige Authentifizierung und überträgt dieses an die Clienteinrichtung.

Typischerweise wird das Verfahren von der Clienteinrichtung mit einer Authentifizierungsanfrage zum Aufbau einer Datenkommunikationssitzung zwischen der Clienteinrichtung und der Servereinrichtung eingeleitet. Korrespondierend zu dem erfindungsgemäßen Verfahren auf der Servereinrichtung überträgt die Clienteinrichtung zur vorläufigen Authentisierung ein Einmalkennwort an die Servereinrichtung, das die Clienteinrichtung während einer vorherigen Datenkommunikationssitzung von der Servereinrichtung empfangen hat. Entsprechend empfängt und speichert die Clienteinrichtung während einer bestehenden Datenkommunikationssitzung ein weiteres Einmalkennwort von der Servereinrichtung für die nächste vorläufige Authentisierung gegenüber der Servereinrichtung zum Aufbau einer nachfolgenden Datenkommunikationssitzung. Auf Veranlassung der Servereinrichtung führt die Clienteinrichtung während der bestehenden Datenkommunikationssitzung dann die notwendigen Schritte für die sichere Authentisierung durch.

Die Erfindung ermöglicht, dass eine Clienteinrichtung trotz einer hohen Serverauslastung durch die Servereinrichtung authentifiziert wird und die gewünschte Datenkommunikationssitzung zustande kommt, und zwar zunächst ohne wesentliche Verzögerungen durch eine vorläufige Authentisierung. Zu einem späteren Zeitpunkt, wenn eine hinreichend niedrige Serverauslastung vorliegt, wird die rechenzeitintensivere sichere Authentisierung nachgeholt. Die vorläufige Authentisierung ist hierbei mit der Erzeugung, Übertragung und Verifikation eines Einmalkennworts wesentlich rechenzeiteffizienter für die Servereinrichtung als die sichere Authentisierung. Dadurch kann eine zentrale Servereinrichtung viele Clienteinrichtungen in kurzer Zeit bzw. nahezu gleichzeitig authentifizieren, ohne dass wesentliche Sicherheitseinschränkungen oder Verzögerungen hingenommen werden müssen.

Eine erfindungsgemäße Servereinrichtung umfasst zumindest einen Speicher und eine Datenkommunikationsschnittstelle für eine sichere Datenkommunikationsverbindung zu einer Clienteinrichtung sowie eine serverseitige Authentifizierungseinrichtung, die bei einer über der vorgegebenen Auslastungsschwelle liegenden, hohen Serverauslastung eine vorläufige Authentifizierung einer anfragenden Clienteinrichtung durchführt und dieser anschließend ein weiteres Einmalkennwort zur Verfügung stellt. Bei einer nicht oder nicht mehr über der vorgegebenen Auslastungsschwelle liegenden Serverauslastung wird die Clienteinrichtung von der serverseitigen Authentisierungseinrichtung sicher authentisiert.

Entsprechend umfasst eine erfindungsgemäße Clienteinrichtung zumindest einen Speicher und eine Datenkommunikationsschnittstelle für eine sichere Datenkommunikationsverbindung zu der Servereinrichtung sowie eine clientseitige Authentisierungseinrichtung, die zum Zwecke des Aufbaus einer Datenkommunikationssitzung zu der Servereinrichtung ein im Rahmen einer vorhergehenden Datenkommunikationssitzung empfangenes Einmalkennwort an die Servereinrichtung überträgt und von dieser ein weiteres Einmalkennwort für die nächste vorläufige Authentisierung zum Aufbau einer nachfolgenden Datenkommunikationssitzung empfängt. Im weiteren Verlauf der dann aufgebauten Datenkommunikationssitzung wird die Clienteinrichtung auf Veranlassung der Servereinrichtung sicher authentifiziert.

Vorzugsweise wird die Datenkommunikation zwischen der Servereinrichtung und der Clienteinrichtung während der Datenkommunikationssitzung mittels symmetrischen Sitzungsschlüsseln verschlüsselt, die der Servereinrichtung und der Clienteinrichtung übereinstimmend vorliegen, z.B. durch eine regelmäßige separate zweiseitige Vereinbarung von Sitzungsschlüsseln zwischen der Servereinrichtung und der Clienteinrichtung, durch eine einseitige Festlegung von einer der beiden Einrichtungen oder durch eine Festlegung von einem vertrauenswürdigen Dritten. Jedoch werden neue symmetrische Sitzungsschlüssel vorzugsweise nicht direkt zu Beginn einer Datenkommunikationssitzung, d.h. in dem Stadium der lediglich vorläufigen Authentifizierung der Clienteinrichtung, zweiseitig vereinbart oder einseitig festgelegt, sondern erst nach erfolgter sicherer Authentifizierung. Insofern wird die weitere Datenkommunikation nach einer vorläufigen Authentifizierung durch diejenigen bereits vorliegenden symmetrischen Sitzungsschlüssel gesichert, die auch schon bei der vorherigen Datenkommunikationssitzung eingesetzt wurden. Erst nach der sicheren Authentisierung werden die vorliegenden symmetrischen Sitzungsschlüssel verworfen und die weitere Datenkommunikation mit neuen symmetrischen Sitzungsschlüsseln gesichert.

Insbesondere wird auch ein von der Servereinrichtung an die Clienteinrichtung übertragendes weiteres Einmalkennwort mit einem symmetrischen Sitzungsschlüssel verschlüsselt. Diese serverseitige symmetrische Verschlüsselungsoperation wird aber vorzugsweise nur bei niedriger Serverauslastung durchgeführt, um die Ressourcen der Servereinrichtung bei hoher Serverauslastung nicht zusätzlich durch verschiebbare kryptographische Operationen im Zusammenhang mit einer zukünftigen Authentifizierung zu belasten. Ebenso wird das symmetrische verschlüsselte weitere Einmalkennwort aus demselben Grund vorzugsweise bei niedriger Serverauslastung an die Clienteinrichtung übertragen.

Falls die Serverauslastung jedoch während der gesamten restlichen Datenkommunikationssitzung über der Auslastungsschwelle liegt, wird das verschlüsselte Einmalkennwort spätestens mit Beendigung der aktuellen Datenkommunikationssitzung durch eine Abmeldeanfrage der Clienteinrichtung unabhängig von einer Serverauslastung an die Clienteinrichtung übertragen, da andernfalls zum Aufbau einer nachfolgenden Datenkommunikationssitzung keine vorläufige Authentisierung durchgeführt werden könnte.

Die rechenzeitintensive und sichere Authentifizierung der Clienteinrichtung wird vorzugsweise durch ein asymmetrisches Kryptographieverfahren mit einem asymmetrischen Schlüsselpaar durchgeführt, wobei die Clienteinrichtung einen geheimen Authentisierungsschlüssel und die Servereinrichtung den zugehörigen öffentlichen Authentisierungsschlüssel besitzt. Die asymmetrische Authentifizierung wird von der Servereinrichtung bei einer ausreichend niedrigen Serverauslastung veranlasst, indem ein Authentifizierungskennwort an die betreffende Clienteinrichtung übertragen wird, dass abhängig von der durchgeführten sicheren Authentifizierung verschlüsselt oder unverschlüsselt sein kann.

Die sichere Authentifizierung wird entweder dadurch durchgeführt, dass die Servereinrichtung ein unverschlüsseltes Authentifizierungskennwort an die Clienteinrichtung schickt, diese das empfangene Authentifizierungskennwort mit dem geheimen Authentifizierungsschlüssel verschlüsselt (d.h. signiert) und in verschlüsseltem Zustand als Authentisierungsantwort an die Servereinrichtung zurückschickt. Durch Entschlüsseln der Authentifizierungsantwort mit dem öffentlichen Authentifizierungsschlüssel kann die Servereinrichtung abschließend die Übereinstimmung mit dem von ihr ursprünglich an die Clienteinrichtung übertragenen Authentifizierungskennwort prüfen. Andererseits kann die Servereinrichtung das Authentifizierungskennwort auch mit ihrem öffentlichen Authentifizierungsschlüssel verschlüsselt an die Clienteinrichtung übertragen, die das verschlüsselte Authentifizierungskennwort mit ihrem geheimen Authentifizierungsschlüssel entschlüsselt und im Klartext als Authentisierungsantwort an die Servereinrichtung zurückschickt. In diesem Fall kann die Servereinrichtung ohne eine weitere kryptographische Operation die Übereinstimmung des von der Clienteinrichtung empfangenen mit dem der Servereinrichtung ursprünglich unverschlüsselt vorliegendem Authentifizierungskennwort prüfen. Hierbei werden etwaige rechenzeitintensive kryptographische Operationen der Servereinrichtung vorzugsweise dann durchgeführt, wenn die Serverauslastung hinreichend niedrig ist, d.h. unter der Auslastungsschwelle liegt. Ebenso werden andere rechenzeit- oder kommunikationsintensive Vorgänge, wie z.B. auch die Übertragung eines verschlüsselten oder unverschlüsselten Authentisierungskennworts an die Clienteinrichtung, vorzugsweise bei hinreichend niedriger Serverauslastung durchgeführt.

Gemäß einer besonders bevorzugten Ausführungsform ist Teil der Clienteinrichtung ein portabler Datenträger mit einem sicheren Speicher, der die clientseitige Authentisierungseinrichtung der Clienteinrichtung bildet bzw. als ausführbare Applikation oder dergleichen bereitstellt. Der Datenträger führt dann die verfahrens- bzw. sicherheitsrelevanten Operationen der Clienteinrichtung durch. Zum Beispiel entschlüsselt die clientseitige Authentisierungseinrichtung des Datenträgers ein von der Servereinrichtung verschlüsselt empfangenes weiteres Einmalkennwort mit einem symmetrischen Sitzungsschlüssel und speichert es in dem sicheren Speicher ab. Ebenso kann die clientseitige Authentisierungseinrichtung des Datenträgers symmetrische Sitzungsschlüssel erzeugen und abspeichern oder im Rahmen der sicheren Authentifizierung ein von der Servereinrichtung empfangenes Authentisierungskennwort asymmetrisch verschlüsseln (d.h. signieren) oder ein verschlüsselt empfangenes Authentisierungskennwort asymmetrisch entschlüsseln.

Die sichere Authentifizierung kann, insbesondere als asymmetrische Authentifizierung, gemäß einem herkömmlichen Challenge-Response-Verfahren ausgestaltet sein. Ebenso kann jede der bisher genannten Authentifizierungen nicht nur eine einseitige Authentifizierung (Client gegenüber Server), sondern eine gegenseitige Authentifizierung (Client gegenüber Server und Server gegenüber Client) umfassen. Insbesondere kann die sichere Authentifizierung eine gegenseitige asymmetrische Authentifizierung zwischen Client und Server sein.

Weitere Merkmale und Vorteile der Erfindung ergeben sich aus der folgenden Beschreibung von den erfindungsgemäßen Ausführungsbeispielen sowie weiteren Ausführungsalternativen im Zusammenhang mit den Zeichnungen, die zeigen:
- Figur 1: ein Ablaufdiagramm eines erfindungsgemäßen Verfahrens mit vorläufiger und sicherer Authentifizierung; und
- Figur 1a: ein Ablaufdiagramm einer alternativen sicheren Authentifizierung; und
- Figur 2: eine schematische Ansicht einer Servereinrichtung und einer Clienteinrichtung zur Umsetzung des Verfahrens nach Fig. 1.

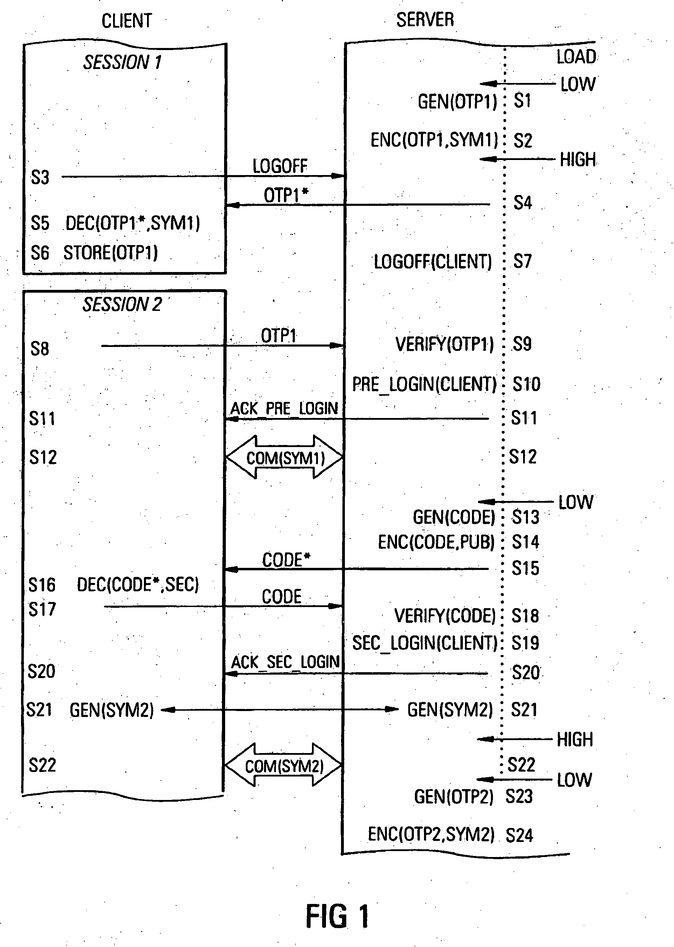

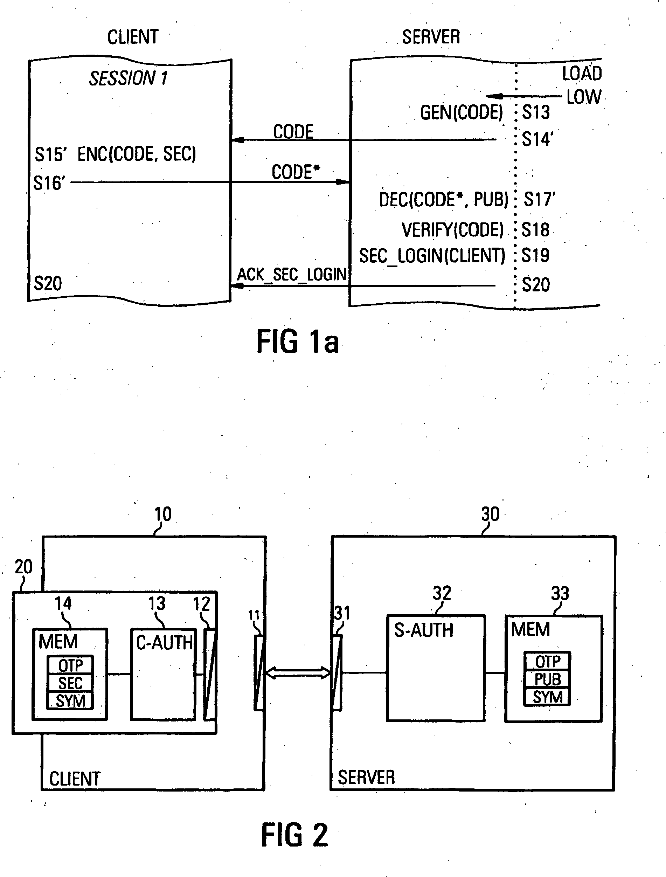

Figur 1 illustriert einen von einer Serverauslastung einer Servereinrichtung 30 (SERVER) abhängigen Authentisierungsvorgang einer Clienteinrichtung 10 (CLIENT) gegenüber der Servereinrichtung 30, bei dem eine übermäßige Serverauslastung in Folge einer nahezu gleichzeitigen Anmeldung einer Vielzahl von Clienteinrichtungen 10 gegenüber der Servereinrichtung 30 verhindert wird. Ein derartiges Szenario kann beispielsweise bei zentralen Datenbankservern (z.B. Produkt- oder Adressdatenbanken oder dergleichen) auftreten, auf die eine Vielzahl von Clienteinrichtungen (z.B. Verkaufsterminals, Filialrechnern oder dergleichen) nach einer Anmeldung regelmäßig zugreift. Typischerweise melden sich die Clienteinrichtungen 10 z.B. zu Beginn eines Geschäftstages nahezu gleichzeitig gegenüber der Servereinrichtung 30 an, so dass mitunter sehr hohe Serverauslastungen entstehen können ("Rush Hour"), während die anschließenden Zugriffe der angemeldeten Clienteinrichtungen 10 relativ gleichmäßig über den Tag verteilt sind und nur noch geringe bis moderate Serverauslastungen zur Folge haben. Vor diesem Hintergrund wird die Serverauslastung der Servereinrichtung 30 mit dem in Fig. 1 illustrierten Verfahren durch rechenzeiteffiziente aber dennoch hinreichend sichere, vorläufige Authentifizierungen während einer solchen "Rush Hour" und nachfolgende sichere Authentifizierungen in Zeiten geringer Serverauslastung besser verteilt.

Figur 2 illustriert eine Authentifizierungsanordnung bestehend aus einer Clienteinrichtung 10 mit einem darin eingesetzten portablen Datenträger 20, z.B. einer Chipkarte, einem USB-Datenträger oder dergleichen, sowie einer Servereinrichtung 30 zur Durchführung des Verfahrens nach Fig. 1, wobei die Clienteinrichtung 10 und die Servereinrichtung 30 über geeignete Schnittstellen 11, 31 mit einem Datenkommunikationsnetz verbunden sind und eine Datenkommunikationsverbindung zwischen der Clienteinrichtung 10 und der Servereinrichtung 30 herstellen.

Die von der Clienteinrichtung 10 im Zusammenhang mit dem Verfahren nach Fig. 1 verwendeten sicherheitskritischen Daten, z.B. ein Einmalkennwort OTP, ein geheimer Authentifizierungsschlüssel SEC sowie ein aktueller Satz symmetrischer Sitzungsschlüssel SYM ist in einem sicheren Speicher 14 des Datenträgers 20 abgespeichert. Entsprechend sind die von der Servereinrichtung 30 verwendeten sicherheitskritischen Daten in einen Speicher 33 der Servereinrichtung 30 abgespeichert, z.B. ein korrespondierendes Einmalkennwort OTP, ein öffentlicher Authentifizierungsschlüssel PUB oder ein Satz mit symmetrischen Sitzungsschlüsseln SYM, die mit denjenigen der Clienteinrichtung 10 übereinstimmen. Der Datenträger 20 ist über eine kontaktbehaftete oder kontaktlose Schnittstelle 12 mit der Clienteinrichtung 10 verbunden und umfasst eine clientseitige Authentisierungseinrichtung 13 (C-AUTH), die die wesentlichen Verfahrensschritte und Operationen des Verfahrens nach Fig. 1 in Wechselwirkung mit einer serverseitigen Authentifizierungseinrichtung 32 (S-AUTH) der Servereinrichtung 30 durchführt. Insbesondere führen die clientseitige Authentisierungseinrichtung 13 und die serverseitige Authentifizierungseinrichtung 32 die sicherheitskritischen bzw. kryptographischen Operationen durch, also alle nachfolgend anhand der Fig. 1 erläuterten Schritte, die eine symmetrische oder asymmetrische Ver- oder Entschlüsselung oder ein Abspeichern von sicherheitskritischen Daten betreffen. Da bei der in Fig. 2 dargestellten Clienteinrichtung 10 die verfahrenswesentlichen Schritte und Operationen von dem Datenträger 20 ausgeführt werden, übernimmt die eigentliche Clienteinrichtung 10, z.B. ein mit einem Chipkartenlesegerät ausgestatteter Computer oder dergleichen, nur mehr die Datenübertragung über die Schnittstellen 11 und 12 zwischen der clientseitigen Authentisierungseinrichtung 13 und der Schnittstelle 31 der Servereinrichtung 30 bzw. deren serverseitiger Authentifizierungseinrichtung 32.

Das in Fig. 1 illustrierte Verfahren unterteilt sich anhand der von der Clienteinrichtung 10 mit der Servereinrichtung 30 durchgeführten Kommunikationssitzungen zeitlich in eine erste, vorhergehende Sitzung (SESSION 1), in deren Rahmen die Schritte S1 bis S7 durchgeführt werden, und eine zweite, nachfolgende Datenkommunikationssitzung (SESSION 2), in deren Rahmen die Schritte S8 bis S24 durchgeführt werden. Hierbei dienen die Schritte S1 bis S7 der ersten Datenkommunikationssitzung der Vorbereitung einer vorläufigen Authentifizierung der Clienteinrichtung 10 durch die Servereinrichtung 30 im Rahmen eines Aufbaus der zweiten Datenkommunikationssitzung mit den Schritten S8 bis S11.

Die vorläufige Authentifizierung wird durch einen für die Servereinrichtung 30 rechenzeiteffizienten Vergleich von Einmalkennwörtern OTP1 durchgeführt. Demgegenüber wird die sichere Authentifizierung in den Schritten S13 bis S20 mittels einer rechenzeitintensiven asymmetrischen Authentifizierung durchgeführt. Ob eine vorläufige Authentifizierung oder eine sichere Authentifizierung einer anfragenden Clienteinrichtung 10 durchgeführt wird, hängt von der Auslastung des Prozessors (nicht dargestellt) der Servereinrichtung 30 ab, wobei bei einer Serverauslastung, die über einer vorgegebenen Auslastungsschwelle liegt (nachfolgend als hohe Serverauslastung bezeichnet), die rechenzeiteffizientere vorläufige Authentifizierung durchgeführt wird, und bei einer Serverauslastung, die nicht über der vorgegebenen Auslastungsschwelle liegt (nachfolgend als niedrige Serverauslastung bezeichnet), die sichere Authentifizierung durchgeführt wird. Zu diesem Zweck überwacht die serverseitige Authentifizierungseinrichtung 32 fortlaufend die Serverauslastung (LOAD), um eine niedrige (LOW) oder hohe (HIGH) Serverauslastung zu erkennen.

Im Verlauf der ersten Datenkommunikationssitzung erzeugt die serverseitige Authentifizierungseinrichtung 32 in Schritt S1 ein Einmalkennwort (GEN(OTP1)) für eine etwaige vorläufige Authentifizierung im Rahmen des Aufbaus einer nachfolgenden, zweiten Datenkommunikationssitzung. In Schritt S2 wird das erzeugte Einmalkennwort mit einem im Verlauf der ersten Datenkommunikationssitzung erzeugten symmetrischen Sicherungsschlüssel SYM1 verschlüsselt (ENC(OTP1, SYM1)=OPT1*). Die rechenzeitintensiven Operationen der Schritte S1 und S2 sowie die spätere Übertragung des symmetrisch verschlüsselten Einmalkennworts OTP1* an die Clienteinrichtung 10 werden prinzipiell bei niedriger Serverauslastung durchgeführt.

Bei der in Fig. 1 skizzierten Situation liegt jedoch nach Schritt S2 wieder eine hohe Serverauslastung vor, so dass der Übertragungsschritt S4 zunächst zurückgestellt wird, bis entweder wieder eine niedrige Serverauslastung vorliegt oder, wie im Falle der illustrierten Schritte S3 und S4, eine Abmeldeanfrage (LOGOFF) der Clienteinrichtung 10 zur Beendigung der ersten Datenkommunikationssitzung in Schritt S3 an die Servereinrichtung 20 gesendet wird, so dass das symmetrisch verschlüsselte Einmalkennwort OPT1* in Schritt S4 unabhängig von der tatsächlichen Serverauslastung an die Clienteinrichtung 10 übertragen werden muss, damit die Clienteinrichtung 10 in Schritt S7 schließlich abgemeldet werden kann (LOGOFF(CLIENT)).

Clientseitig wird in den Schritten S5 und S6 das empfangene symmetrisch verschlüsselte Einmalkennwort OPT1* entschlüsselt (DEC(OTP1*, SYM1)=OPT1) und in dem sicheren Speicher 14 der Clienteinrichtung 10 für eine nachfolgende vorläufige Authentifizierung. Alternativ kann auch das empfangene symmetrisch verschlüsselte Einmalkennwort OTP1* in dem sicheren Speicher 14 abgelegt werden, um es erst zu Beginn der nachfolgenden Datenkommunikationssitzung zu entschlüsseln.

Die nachfolgende, zweite Datenkommunikationssitzung beginnt in Schritt S8 mit einer Anmeldeanfrage der Clienteinrichtung 10 gegenüber der Servereinrichtung 30, die zumindest das in Schritt S4 empfangene unverschlüsselte Einmalkennwort OTP1 umfasst. Da in Schritt S9 immer noch eine hohe Serverauslastung vorliegt, führt die serverseitige Authentifizierungseinrichtung 32 eine vorläufige Authentifizierung durch und vergleicht dazu das in Schritt S11 von der Clienteinrichtung 10 empfangene Einmalkennwort OTP1 mit dem in Schritt S1 erzeugten Einmalkennwort (VERIFY(OPT1)). Sofern die beiden Einmalkennwörter übereinstimmen, gilt die Clienteinrichtung 10 in Schritt S10 als vorläufig authentifiziert (PRE_LOGIN(CLIENT)) und erhält in Schritt S11 eine vorläufige Authentifizierungsbestätigung (ACK_PRE_LOGIN). Die weitere Datenkommunikation zwischen der Clienteinrichtung 10 und der Servereinrichtung 30 in Schritt S12 im Rahmen der soeben aufgebauten Datenkommunikationssitzung wird weiterhin mit denjenigen symmetrischen Sitzungsschlüsseln SYM1 gesichert (COM(SYSM1)), die der Clienteinrichtung 10 und der Servereinrichtung 30 noch von der vorhergehenden, ersten Datenkommunikationssitzung vorliegen.

Sobald wieder eine geringe Serverauslastung vorliegt, leitet die Servereinrichtung 30 die sichere Authentifizierung mit der Erzeugung eines Authentisierungskennworts CODE in Schritt S13 ein (GEN(CODE)), verschlüsselt diese bei anhaltender geringer Serverauslastung in Schritt S14 mit dem öffentlichen Authentisierungsschlüssel (ENC(CODE, PUB)=CODE*) und überträgt das asymmetrisch gesicherte Authentisierungskennwort CODE* in Schritt S15 an die Clienteinrichtung 10. Die clientseitige Authentifizierungseinrichtung 13 entschlüsselt in Schritt S16 das empfangene, verschlüsselte Authentisierungskennwort CODE* mit dem geheimen Authentisierungsschlüssel (DEC(CODE*, SEC)=CODE) und schickt die nunmehr unverschlüsselte Authentisierungskennung CODE in Schritt S17 zurück an die Servereinrichtung 30, die in Schritt S18 die empfangene Authentisierungskennung CODE mit der in Schritt 13 erzeugten Authentisierungskennung vergleicht (VERI-FY(CODE)). Sofern die beiden Authentisierungskennungen übereinstimmen, gilt die Clienteinrichtung 10 in Schritt S19 als sicher authentifiziert (SEC_LOGIN (CLIENT)) und erhält in Schritt S20 eine entsprechende Authentisierungsbestätigung (ACK_SEC_LOGIN).

Nach der erfolgten sicheren Authentifizierung der Clienteinrichtung 10 gegenüber der Servereinrichtung 30 wird nunmehr in Schritt S22 ein neuer Satz symmetrischer Sitzungsschlüssel SYM2 erzeugt, um die bisher verwendeten symmetrischen Sitzungsschlüssel SYM1 zu erneuern (GEN(SYM2)). Die weitere Datenkommunikation in Schritt S22 im Rahmen der zweiten Datenkommunikationssitzung wird mit den erzeugten symmetrischen Sitzungsschlüsseln SYM2 gesichert (COM(SYM2)).

Die Erzeugung neuer symmetrischer Sitzungsschlüssel SYM2 in Schritt S21 kann auf verschiedene Weise erfolgen. Zum Beispiel können die Sitzungsschlüssel gleichberechtigt ausgehandelt werden (z.B. über ein "Handshake" Verfahren oder dergleichen) oder sie werden entweder von der Clienteinrichtung 10 oder der Servereinrichtung 30 selbständig erzeugt und der jeweils anderen Einrichtung mitgeteilt. Ebenso können die symmetrischen Sitzungsschlüssel von einem vertrauenswürdigen zentralen Authentifizierungs- bzw. Schlüsseldienst bezogen werden. In diesen Fällen liegt mit Beendigung des Schritts S21 auf der Clienteinrichtung 10 und der Servereinrichtung 30 ein identischer Satz neuer symmetrischer Sitzungsschlüssel vor. Alternativ ist es auch möglich, dass ein Sitzungsschlüssel erst unmittelbar vor der Übertragung einer symmetrisch verschlüsselten Nachricht an die jeweils andere Einrichtung 10, 30 gesichert übertragen wird.

Abschließend wiederholen sich in den Schritten S23 und S24 die Schritte S1 und S2 zum Erzeugen und Verschlüsseln eines neuen, individuellen Einmalkennworts OTP2 für eine weitere vorläufige Authentifizierung, wobei für die Verschlüsselung des neuen Einmalkennworts OTP2 in Schritt S24 einer der in Schritt S21 erzeugten neuen symmetrischen Sitzungsschlüssel SYM2 verwendet wird.

In Fig. 1 führt die Servereinrichtung 30 die Schritte S13 bis S22 während einer kontinuierlichen Phase geringer Serverauslastung durch. Falls die Serverauslastung bereits früher wieder ansteigt, z.B. vor der asymmetrischen Verschlüsselung der Authentisierungskennung CODE in Schritt S14, kann die sichere Authentifizierung so lange unterbrochen werden, bis wieder eine niedrige Serverauslastung vorliegt. Insofern ist es möglich, dass die Schritte S13 bis S21 nicht unmittelbar aufeinander folgend ausgeführt werden können, sondern immer wieder durch Phasen hoher Serverauslastung unterbrochen werden. Alternativ ist es auch möglich, die sichere Authentifizierung unabhängig von der Serverauslastung fortzusetzen, wenn sie einmal aufgrund eine niedrigen Serverauslastung mit Schritt S13 eingeleitet wurde.

Abweichend von Fig. 1 kann nach der Authentisierungsanfrage der Clienteinrichtung 10 in Schritt S9 auch eine niedrige Serverauslastung vorliegen. In diesem Fall kann direkt eine sichere Authentifizierung durchgeführt und auf die vorläufige Authentifizierung (zunächst) verzichtet werden. Falls im Verlauf einer solchen direkten sicheren Authentifizierung die Serverauslastung über die vorgegebene Auslastungsschwelle ansteigen sollte, kann die vorläufige Authentifizierung unmittelbar nachgeholt werden, damit eine zügige Anmeldung der Clienteinrichtung 10 ermöglicht wird.

Die in der Fig. 1 illustrierte sichere Authentifizierung beruht auf der Fähigkeit der Clienteinrichtung, den Besitz des geheimen Authentifizierungsschlüssels SEC durch Entschlüsseln des verschlüsselten Authentifizierungskennworts CODE* nachzuweisen (vgl. Fig. 1, Schritt S16). Demgegenüber beruht die in Fig. 1a gezeigte alternative sichere Authentifizierung darauf, dass die Clienteinrichtung 10 den Besitz des geheimen Authentifizierungsschlüssels SEC durch Signieren (bzw. Verschlüsseln) des im Klartext empfangenen Authentifizierungskennworts CODE nachweist (vgl. Fig. 1a, Schritt S15'). Dazu wird das von der Servereinrichtung 10 in Schritt S13 erzeugte Authentifizierungskennwort CODE in Schritt S14' unverschlüsselt an die Clienteinrichtung 10 übertragen, in Schritt S15' von der clientseitigen Authentifizierungseinrichtung 13 mit dem geheimen Authentisierungsschlüssel SEC signiert bzw. verschlüsselt (ENC(CODE, SEC)=CODE*) und in Schritt S16' an die Servereinrichtung 30 zurückschickt. Dort wird das signierte Authentifizierungskennwort CODE* mit dem zugehörigen öffentlichen Authentisierungsschlüssel PUB in Schritt S17' entschlüsselt (DEC(CODE*, PUB)=CODE) und auf Übereinstimmung mit dem in Schritt S13 erzeugten Authentifizierungskennwort CODE geprüft.

## Patentansprüche

1. Verfahren auf einer Servereinrichtung (30) zum Authentifizieren einer mit der Servereinrichtung (30) in Datenkommunikation stehenden Clienteinrichtung (10), mit den folgenden Schritten im Rahmen einer Datenkommunikationssitzung:
- erstes Authentifizieren (S8-S11) der Clienteinrichtung (10) durch Prüfen (S9) eines von der Servereinrichtung (30) empfangenen Einmalkennworts der Clienteinrichtung (10) und eines auf der Servereinrichtung (30) vorliegenden Einmalkerinworts auf Übereinstimmung;
- Erzeugen (S1, S23) eines Einmalkennworts und Übertragen (S4) des Einmalkennworts an die Clienteinrichtung (10);
**dadurch gekennzeichnet, dass**
das in dem Schritt des ersten Authentifizierens (S8-S11) empfangene Einmalkennwort ein erstes Einnalkennwort für ein vorläufiges Authentifizieren im Rahmen der Datenkommunikationssitzung ist;
das erzeugte und übertragene Einrnalkennwort ein weiteres Einmalkennwort für eine weitere vorläufige Authentifizierung der Clienteinrichtung (10) im Rahmen einer nachfolgenden Datenkommunikationssitzung ist;
das erste, vorläufige Authentifizieren (S8-S11) erfolgt, sofern eine Serverauslastung über einer vorgegebenen Auslastungsschwelle liegt; und
ein sicheres Authentifizieren (S13-S20) der Clienteinrichtung (10) erfolgt, sobald die Serverauslastung nicht oder nicht mehr über der Auslastungsschwelle liegt.

2. Verfahren nach Anspruch 1, **dadurch gekennzeichnet, dass**, sofern das von der Servereinrichtung (30) empfangene (S8) und das der Servereinrichtung (30) vorliegende Einmalkennwort übereinstimmen (S9), eine vorläufige Authentifizierungsbestätigung an die Clienteinrichtung (10) übertragen wird (S11) und die weitere Datenkommunikation mit der Clienteinrichtung (10) durch auf der Servereinrichtung (30) vorliegende symmetrische Sitzungsschlüssel gesichert wird (S12).

3. Verfahren nach Anspruch 1 oder 2, **dadurch gekennzeichnet, dass** nach dem sicheren Authentifizieren (S13-S20) der Clienteinrichtung (10) auf der Servereinrichtung (30) vorliegende symmetrische Sitzungsschlüssel verworfen und neue symmetrische Sitzungsschlüssel erzeugt, empfangen oder vereinbart werden (S21), mit denen die weitere Datenkommunikation mit der Clienteinrichtung 810) gesichert wird (S22).

4. Verfahren nach einem der Ansprüche 1 bis 3, **dadurch gekennzeichnet, dass** das weitere Einmalkennwort mit einem auf der Servereinrichtung (30) vorliegenden symmetrischen Sitzungsschlüssel verschlüsselt (S2, S24) und an die Clienteinrichtung übertragen wird (S4).

5. Verfahren nach Anspruch 4, **dadurch gekennzeichnet, dass** das symmetrisch verschlüsselte weitere Einmalkennwort an die Clienteinrichtung (10) übertragen wird (S4), sobald die Serverauslastung nicht mehr über der vorgegebenen Auslastungsschwelle liegt und spätestens, sobald die Servereinrichtung (30) eine Abmeldeanfrage der Clienteinrichtung (10) empfängt (S3).

6. Verfahren nach einem der Ansprüche 1 bis 5, **dadurch gekennzeichnet, dass** zum sicheren Authentifizieren der Clienteinrichtung (10) eine Authentifizierungskennung an die Clienteinrichtung (10) übertragen wird (S14') und geprüft wird (S18), ob eine von der Servereinrichtung (20) empfangene (S16') Authentifizierungsantwort der Clienteinrichtung (10) der von der Clienteinrichtung (10) asymmetrisch signierten (S15') Authentisierungskennung entspricht.

7. Verfahren nach einem der Ansprüche 1 bis 5, **dadurch gekennzeichnet, dass** zum sicheren Authentifizieren der Clienteinrichtung (10) eine von der Servereinrichtüng (30) asymmetrisch verschlüsselte (S14) Authentifizierungskennung an die Clienteinrichtung (10) übertragen wird (S15) und geprüft wird (S18), ob eine von der Servereinrichtung (30) empfangene (S17) Authentifizierungsantwort der Clienteinrichtung (10) der Authentisierungskennung entspricht.

8. Verfahren nach einem der Ansprüche 4 bis 7, **dadurch gekennzeichnet, dass** die Servereinrichtung (30) das weitere Einmalkennwort symmetrisch verschlüsselt (S2, S24) und/ oder die Authentisierungskennung asymmetrisch verschlüsselt (S14) und/oder die Authentisierungskennung oder die asymmetrisch verschlüsselte Authentisierungskennung an die Clienteinrichtung (10) überträgt (S15; S14'), wenn die Serverauslastung nicht mehr über der vorgegebenen Auslastungsschwelle liegt.

9. Servereinrichtung (30), umfassend zumindest einen Speicher (33) und eine Datenkommunikationsschnittstelle (31) für eine sichere Datenkommunikationsverbindung zu einer Clienteinrichtung (10),
eine serverseitige Authentifizierungseinrichtung (32), die eingerichtet ist, eine mit der Servereinrichtung (30) in Datenkommunikation stehende Clienteinrichtung (10) durch Prüfen eines von der Servereinrichtung (30) empfangenen Einmalkennworts der Clienteinrichtung (10) und eines in dem Speicher (22) der Servereinrichtung (30) vorliegenden Einmalkennworts auf Übereinstimmung zu authentifizieren, sowie ein Einmalkennwort zu erzeugen und für eine Authentisierung an die Clienteinrichtung (10) zu übertragen;
**dadurch gekennzeichnet, dass**
das empfangene Einmalkennwort ein erstes Einmalkennwort für ein vorläufiges Authentifizieren im Rahmen einer Datenkonununikationssitzung ist; das erzeugte und übertragene Einmalkennwort ein weiteres Einmalkennwort für eine weitere vorläufige Authentifizierung der Clienteinrichtung (10) im Rahmen einer nachfolgenden Datenkommunikationssitzung ist; und
die serverseitige Authentifizierungseinrichtung (32), eingerichtet ist
bei einer über einer vorgegebenen Auslastungsschwelle legenden Serverauslastung die Clienteinrichtung mittels des empfangenen Einmalkennwortes vorläufig zu authentifizieren, und
bei einer nicht oder nicht mehr über der vorgegebenen Auslastungsschwelle liegenden Serverauslastung die Clienteinrichtung (10) sicher zu authentisieren.

10. Servereinrichtung (30) nach Anspruch 9, **dadurch gekennzeichnet, dass** die Servereinrichtung (30) eingerichtet ist, ein Verfahren nach einem der Ansprüche 2 bis 8 auszuführen.

11. System umfassend eine Servereinrichtung (30) nach Anspruch 9 oder 10 und eine Clienteinrichtung (10).

## Claims

1. A method on a server device (30) for authenticating a client device (10) being in data communication with the server device (30), having the following steps within the framework of a data communication session:
first authentication (S8-S11) of the client device (10) by checking (S9) whether there is a match between a one-time password of the client device (10) received by the server device (30) and a one-time password present on the server device (30);
generating (S1, S23) a one-time password and transmitting (S4) the one-time password to the client device (10); **characterized in that**
the one-time password received in the step of the first authentication (S8-S11) is a first one-time password for a preliminary authentication within the framework of the data communication session; the generated and transmitted one-time password is a further one-time password for a further preliminary authentication of the client device (10) within the framework of a subsequent data communication session;
the first, preliminary authentication (S8-S11) is effected if a server load is above a predetermined load threshold; and
a secure authentication (S13-S20) of the client device (10) is effected as soon as the server load is not or is no longer above the load threshold.

2. The method according to claim 1, **characterized in that**, if the one-time password that was received (S8) by the server device (30) and the one-time password that is present on the server device (30) match (S9), a preliminary authentication confirmation is transmitted (S11) to the client device (10) and the further data communication with the client device (10) is secured (S12) by symmetrical session keys present on the server device (30).

3. The method according to claim 1 or 2, **characterized in that** after the secure authentication (S13-S20) of the client device (10), symmetrical session keys present on the server device (30) are discarded and new symmetrical session keys are generated, received or agreed (S21), by which the further data communication with the client device (10) is secured (S22).

4. The method according to any of the claims 1 to 3, **characterized in that** the further one-time password is encrypted (S2, S24) with a symmetrical session key present on the server device (30) and is transmitted (S4) to the client device.

5. The method according to claim 4, **characterized in that** the symmetrically encrypted further one-time password is transmitted (S4) to the client device (10) as soon as the server load is no longer above the predetermined load threshold, and at the latest upon receipt (S3) of a logoff request of the client device (10) by the server device (30).

6. The method according to any of the claims 1 to 5, **characterized in that** for the secure authentication of the client device (10) an authentication identifier is transmitted (S 14') to the client device (10) and it is checked (S18) whether an authentication response of the client device (10) received (S16') by the server device (20) corresponds to the authentication identifier asymmetrically signed (S15') by the client device (10).

7. The method according to any of the claims 1 to 5, **characterized in that** for the secure authentication of the client device (10) an authentication identifier asymmetrically encrypted (S 14) by the server device (30) is transmitted (S 15) to the client device (10), and it is checked (S18) whether an authentication response of the client device (10) received (S 17) by the server device (30) corresponds to the authentication identifier.

8. The method according to any of the claims 4 to 7, **characterized in that** the server device (30) symmetrically encrypts (S2, S24) the further one-time password and/or asymmetrically encrypts (S 14) the authentication identifier and/or transmits (S 15; S 14') the authentication identifier or the asymmetrically encrypted authentication identifier to the client device (10), when the server load is no longer above the predetermined load threshold.

9. A server device (30), comprising at least one memory (33) and a data communication interface (31) for a secure data communication connection to a client device (10),
a server-side authentication device (32) that is adapted to authenticate a client device (10) being in data communication with the server device (30) by checking whether there is a match between a one-time password of the client device (10) received by the server device (30) and a one-time password present in the memory (22) of the server device (30), and to generate and transmit a one-time password to the client device (10) for an authentication;
**characterized in that**
the received one-time password is a first one-time password for a preliminary authentication within the framework of a data communication session;
the generated and transmitted one-time password is a further one-time password for a further preliminary authentication of the client device (10) within the framework of a subsequent data communication session; and
the server-side authentication device (32) is adapted to
preliminarily authenticate the client device by means of the received one-time password when a server load is above a predetermined load threshold, and
securely authenticate the client device (10) when a server load is not or is no longer above the predetermined load threshold.

10. The server device (30) according to claim 9, **characterized in that** the server device (30) is adapted to execute a method according to any of the claims 2 to 8.

11. A system comprising a server device (30) according to claim 9 or 10 and a client device (10).

## Revendications

1. Procédé sur un dispositif serveur (30) destiné à authentifier un dispositif client (10) étant en communication de données avec le dispositif serveur (30), comprenant les étapes suivantes dans le cadre d'une session de communication de données:
- première authentification (S8-S11) du dispositif client (10) par vérification (S9) d'un mot de passe à usage unique du dispositif client (10) reçu par le dispositif serveur (30) et d'un mot de passe à usage unique se trouvant sur le dispositif serveur (30) quant à leur concordance,
- génération (S1, S23) d'un mot de passe à usage unique et transmission (S4) du mot de passe à usage unique au dispositif client (10);
**caractérisé en ce que**
le mot de passe à usage unique reçu lors de l'étape de la première authentification (S8-S11) est un premier mot de passe à usage unique destiné à une authentification provisoire dans le cadre de la session de communication de données;
le mot de passe à usage unique généré et transmis est un mot de passe à usage unique supplémentaire destiné à une authentification provisoire supplémentaire du dispositif client (10) dans le cadre d'une session de communication de données subséquente;
la première authentification (S8-S11) provisoire a lieu dans la mesure où une charge serveur se trouve au-dessus d'un seuil de charge prédéterminé;
et
une authentification (S13-S20) sûre du dispositif client (10) a lieu dès que la charge serveur ne se trouve pas ou plus au-dessus d'un seuil de charge;

2. Procédé selon la revendication 1, **caractérisé en ce que**, dans la mesure où le mot de passe à usage unique reçu (S8) par le dispositif serveur (30) et celui dont dispose le dispositif serveur (30) concordent (S9), une confirmation provisoire d'authentification est transmise (S11) au dispositif client (10) et la poursuite de la communication de données avec le dispositif client (10) est sécurisée (S12) par des clés de session symétriques se trouvant sur le dispositif serveur (30).

3. Procédé selon la revendication 1 ou 2, **caractérisé en ce que**, après l'authentification (S 13-S20) sûre du dispositif client (10), des clés de session symétriques se trouvant sur le dispositif serveur (30) sont rejetées et de nouvelles clés de session symétriques sont générées, reçues ou stipulées (S21), avec lesquelles la poursuite de la communication de données avec le dispositif client (10) est sécurisée (S22).

4. Procédé selon une des revendications de 1 à 3, **caractérisé en ce que** le mot de passe à usage unique supplémentaire est crypté (S2, S24) avec une clé de session symétrique se trouvant sur le dispositif serveur (30) et est transmis (S4) au dispositif client.

5. Procédé selon la revendication 4, **caractérisé en ce que** le mot de passe à usage unique supplémentaire crypté symétriquement est transmis (S4) au dispositif client (10) dès que la charge serveur ne se trouve plus au-dessus du seuil de charge prédéterminé et au plus tard dès que le dispositif serveur (30) reçoit (S3) une demande de fermeture de la part du dispositif client (10).

6. Procédé selon une des revendications de 1 à 5, **caractérisé en ce que**, pour l'authentification sûre du dispositif client (10), un indicatif d'authentification est transmis (S 14') au dispositif client (10), et il est vérifié (S18) si une réponse d'authentification du dispositif client (10) reçue (S16') par le dispositif serveur (20) correspond à l'indicatif d'authentification signée (S 15') asymétriquement par le dispositif client (10).

7. Procédé selon une des revendications de 1 à 5, **caractérisé en ce que**, pour l'authentification sûre du dispositif client (10), un indicatif d'authentification crypté (S 14) asymétriquement par le dispositif serveur (30) est transmis (S15) au dispositif client (10) et il est vérifié (S18) si une réponse d'authentification du dispositif client (10) reçue (S17) par le dispositif serveur (30) correspond à l'indicatif d'authentification.

8. Procédé selon une des revendications de 4 à 7, **caractérisé en ce que** le dispositif serveur (30) crypte (S2, S24) symétriquement le mot de passe à usage unique supplémentaire et/ou crypte (S 14) asymétriquement l'indicatif d'authentification et/ou transmet (S 15; S 14') au dispositif client (10) l'indicatif d'authentification ou l'indicatif d'authentification crypté asymétriquement quand la charge serveur ne se trouve plus au-dessus du seuil de charge prédéterminé.

9. Dispositif serveur (30) comprenant au moins une mémoire (33) et une interface de communication de données (31) destinée à une liaison sûre de communication de données avec un dispositif client (10),
un dispositif d'authentification (32) côté serveur qui est configuré pour authentifier un dispositif client (10) étant en communication de données avec le dispositif serveur (30) par vérification d'un mot de passe à usage unique du dispositif client (10) reçu par le dispositif serveur (30) et d'un mot de passe à usage unique se trouvant dans la mémoire (22) du dispositif serveur (30) quant à leur concordance, ainsi que pour générer un mot de passe à usage unique et le transmettre pour une authentification au dispositif client (10),
**caractérisé en ce que**
le mot de passe à usage unique reçu est un premier mot de passe à usage unique destiné à une authentification provisoire dans le cadre d'une session de communication de données;
le mot de passe à usage unique généré et transmis est un mot de passe à usage unique supplémentaire destiné à une authentification provisoire supplémentaire du dispositif client (10) dans le cadre d'une session de communication de données subséquente; et
le dispositif d'authentification (32) côté serveur est configuré pour
lors d'une charge serveur se trouvant au-dessus d'un seuil de charge prédéterminé, authentifier provisoirement le dispositif client au moyen du mot de passe à usage unique reçu, et
lors d'une charge serveur ne se trouvant pas ou plus au-dessus du seuil de charge prédéterminé, authentifier de façon sûre le dispositif client (10).

10. Dispositif serveur (30) selon la revendication 9, **caractérisé en ce que** le dispositif serveur (30) est configuré pour exécuter un procédé selon une des revendications de 2 à 8.

11. Système comprenant un dispositif serveur (30) selon la revendication 9 ou 10 et un dispositif client (10).
